# EUROPÄISCHE PATENTSCHRIFT

(11) **EP 1 332 934 B1**
(45) Veröffentlichungstag und Bekanntmachung des Hinweises auf die Patenterteilung: **31.01.2007**
(21) Anmeldenummer: 02028689.4
(22) Anmeldetag: 21.12.2002
(51) Int. Cl.: B60R 25/04

(54) **Motorstart/-stop mit Wähl-/Schalthebel**
Engine start/stop with selector/gearshift lever
Mise en marche/arrêt moteur avec levier de sélection/levier de vitesse

(30) Priorität: 25.01.2002 DE 10202803
(43) Veröffentlichungstag der Anmeldung: 06.08.2003
(73) Patentinhaber: AUDI AG, 85045 Ingolstadt (DE)
(72) Erfinder: Kischkat, Ralf, 85057 Ingolstadt (DE)
(74) Vertreter: Thielmann, Frank

(56) Entgegenhaltungen:
- EP-A- 0 314 611
- DE-A- 3 025 539
- DE-C- 19 839 349
- DE-U- 1 751 914
- US-A- 6 043 568
- PATENT ABSTRACTS OF JAPAN Bd. 1998, Nr. 08, 30. Juni 1998 (1998-06-30) -& JP 10 071870 A (TOKAI RIKA CO LTD), 17. März 1998 (1998-03-17)
- PATENT ABSTRACTS OF JAPAN Bd. 2000, Nr. 12, 3. Januar 2001 (2001-01-03) -& JP 2000 265930 A (MITSUBISHI MOTORS CORP), 26. September 2000 (2000-09-26)

## Beschreibung

Die vorliegende Erfindung betrifft eine Schaltvorrichtung zum Schalten einer elektronischen Komponente eines Kraftfahrzeugs mit einer Betätigungseinrichtung. Insbesondere betrifft die vorliegende Erfindung das Starten und Stoppen des Motors eines Kraftfahrzeugs mit einem sogenannten Keyless-Entry-Keyless-Go-System.

Bei Kraftfahrzeugen mit herkömmlichen Schlüsselsystemen erfolgt sowohl die sogenannte Klemmensteuerung, d. h. das Einschalten der Vorsorgungsspannung für unterschiedliche Verbrauchergruppen, als auch das Starten des Motors über die Stellung des Zündschlüssels beziehungsweise die Drehung desselben.

Zunehmend finden jedoch schlüssellose Zugangsberechtigungssysteme bei Kraftfahrzeugen Verbreitung. Hierfür trägt der Fahrer eine Karte beziehungsweise den Schlüssel bei sich, wenn er den Motor starten will. Es ist nicht notwendig, dass die Karte beziehungsweise der Schlüssel in eine entsprechende Vorrichtung gesteckt werden muss. Vielmehr wird die Karte beziehungsweise der Schlüssel berührungslos über Funk identifiziert und so die Zugangs- beziehungsweise Fahrberechtigung erteilt. In diesem Fall muss die Klemmensteuerung und das Starten des Motors auf anderem Weg erfolgen. Die Automobilhersteller haben hierfür verschiedene Möglichkeiten entwickelt. So eignet sich beispielsweise ein Drehschalter zum Starten des Motors eines Keyless-Entry-Keyless-Go-Kraftfahrzeugs. Ebenso eignet sich hierfür ein gegebenenfalls zweistufiger Drucktaster zum Starten und ein Drucktaster zum Stoppen des Motors. Ferner werden Kraftfahrzeuge mit einem einzigen Taster zum Starten und Stoppen des Motors ausgestattet.

Letztere sind aus der deutschen Patentschrift DE 198 39 349 C 1 bekannt, bei der der Taster als fahrzeugseitig angeordnetes, authentikationselementfrei betätigbares Wegfahrsperren-Betätigungselement zur benutzerangeforderten Auslösung der authentikationsbehafteten Wegfahrsperren-Ansteuerkommunikationsvorgänge vorgesehen ist. Das Bremspedal kann als Betätigungselement zur Aktivierung eines Motorstarts nach dessen Freigabe durch das Wegfahrsperrensteuerteil dienen. Damit braucht zum Starten des Fahrzeugs nur der Taster und anschließend das Bremspedal und zum Abstellen des Fahrzeugs nur erneut der Taster betätigt zu werden.

Die Startvorrichtungen sind in zunehmendem Maße elektronisch gesteuert. Dies ist im vorliegenden Fall insbesondere deswegen notwendig, damit ein bereits laufender Motor nicht nochmals gestartet wird. Die Startersteuerungen für den Motor sind entsprechend auszulegen.

Die Klemmensteuerung kann mit der Start-Stoppbetätigung in geeigneter Weise verknüpft beziehungsweise gekoppelt werden.

Nachteilig an allen genannten Lösungen ist jedoch, dass zwar der Vorgang des Schlüsselsteckens und -drehens entfällt, der Fahrer aber dennoch eine gesondert angebrachte Vorrichtung zum Starten des Motors bedienen muss. Dies macht einen Teil der Bedienungserleichterung der Keyless-Go-Systeme wieder zunichte.

Ein weiterer Nachteil der genannten Systeme besteht darin, dass insbesondere bei Automatikgetrieben, aber auch bei Schaltgetrieben in den USA Vorschriften reglementieren, dass Fahrzeuge nur in kraftschlusslosem Zustand (Leerlauf) gestartet werden können müssen beziehungsweise in gesichertem Zustand abgestellt werden müssen. Beides lässt sich häufig nur durch kostspielige Zusatzeinrichtungen sicherstellen, wie beispielsweise einen sogenannten Interlockschalter am Kupplungspedal.

Aus der Druckschrift DE 30 25 539 A1 ist ein Kraftfahrzeug bekannt, für dessen Motor mehrere Möglichkeiten zum Wiederanlassen gegeben sind. Entweder sorgt der in der Neutralstellung des Getriebeschalthebels angeordnete Schalter dafür, dass bei der Verstellung des Getriebeschalthebels aus der Neutralstellung heraus ein Wiederstarten des Antriebsmotors durch entsprechende Betätigung des Anlassers erfolgt oder aber es ist ein zweiter Schalter vorgesehen, der bei der Verstellung des Getriebeschalthebels in die dem Rückwärtsgang, dem ersten oder zweiten Getriebegang zugeordneten Schaltgassen betätigt wird. Dieser Schalter kann dann ebenfalls den Anlasser zum Wiederstarten des Antriebsmotors betätigen. Auch bei mit automatischen Getrieben ausgerüsteten Kraftfahrzeugen kann ein Motorabschaltverfahren in Stand- und Schubbetriebsphasen durchgeführt werden. Dabei wird dem Getriebewählhebel eine zusätzliche Stellung zugeordnet, in der ein automatisches Abschalten des Motors erfolgen kann. Das Wiederanwerfen des Motors erfolgt durch Betätigen des Gaspedals.

Die Aufgabe der vorliegenden Erfindung besteht darin, eine Schaltvorrichtung zu schaffen, die die Handhabung von Kraftfahrzeugen weiter vereinfacht.

Erfindungsgemäß ist diese Aufgabe durch eine Schaltvorrichtung nach Anspruch 1 gelöst.

Vorteilhafte Weiterbildungen der Erfindung sind in den Unteransprüchen dargestellt.

Der Erfindung liegt die Kenntnis zugrunde, dass die Bedienungserleichterung für den Fahrer bei Keyless-Go-Systemen nicht durch die Betätigung gesonderter Einrichtungen wieder zunichte gemacht werden soll. Die Klemmensteuerung beziehungsweise der Start der Motors soll über die Bedienung von Einrichtungen erfolgen, die er ohnehin direkt nach dem Start bedienen würde. Dies ist beispielsweise bei Schaltgetrieben der Schalthebel und bei Automatikgetrieben der Wählhebel. Startet oder stoppt der Fahrer den Motor des Kraftfahrzeugs mit dem Schalt- oder Wählhebel, muss er neben diesem keine zusätzlichen Elemente zum Starten und Stoppen des Motors betätigen. Dadurch bleiben dem Fahrer ein oder mehrere Handgriffe erspart, wodurch der Bedienungskomfort erhöht wird.

Das Starten und Stoppen des Motors kann ferner auf Bewegungen und/oder Positionen des Hebels beschränkt werden, wie dies gegebenenfalls gesetzlich erforderlich ist. Wenn der Motor nicht in anderen als den erlaubten Positionen gestartet werden kann, so kann auf zusätzliche Sicherungsmaßnahmen, wie Interlock-Schalter oder Anlasssperrschalter, verzichtet werden. Zudem können zusätzliche Taster und Schalter zum Starten und Stoppen des Motors entfallen. Dies reduziert die Herstellungskosten beim Fahrzeugbau.

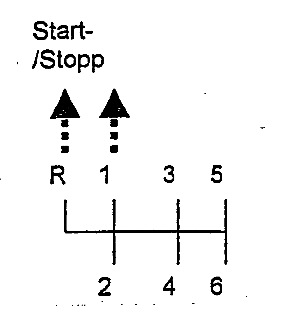

Die vorliegende Erfindung wird nun anhand der beigefügten Zeichnung näher erläutert, die ein Schaltpositionsdiagramm für ein Schaltgetriebe gemäß einer Ausführungsform der vorliegenden Erfindung zeigt.

Die im Folgenden dargestellten Ausführungsbeispiele stellen bevorzugte Ausführungsformen der vorliegenden Erfindung dar.

Das Starten und Stoppen des Motors sowie die Klemmensteuerung erfolgt erfindungsgemäß durch ein Überdrücken des Hebels, der als Getriebebetätigungselement verwendet wird, aus einer nach dem heutigen Stand der Technik bekannten Position heraus. Das Überdrücken kann in dieselbe Richtung erfolgen, in die der Schalt- oder Wählhebel zur Anwahl der betreffenden Position bewegt wurde, oder in eine andere Richtung. Die Start-/Stopp-Position kann einrastend oder so gestaltet sein, dass der Hebel in die ursprünglich gewählte Position wieder zurückfällt.

Eine Ausführungsform der vorliegenden Erfindung ist in der Figur skizziert. Das Fahrzeug verfügt wiederum über ein Sechsganggetriebe einschließlich Rückwärtsgang R. Das Starten des Motors kann dadurch erfolgen, dass der Schalthebel über die Position des ersten Gangs gedrückt wird. Dies macht allerdings erforderlich, dass gleichzeitig die Kupplung betätigt wird, damit sich das Fahrzeug nicht bewegt. Die Startersteuerung sollte in diesem Beispiel also so ausgelegt sein, dass ein Starten des Motors nur erfolgt, wenn die Betätigung des Schalthebels mit der Betätigung des Kupplungspedals gekoppelt ist.

Das Überdrücken der Erster-Gang-Position für das Anschalten des Anlassers eines Kraftfahrzeugs ist deswegen besonders vorteilhaft, da ein Kraftfahrzeug in der Regel im ersten Gang anfährt, so dass für das Anfahren bereits der passende Gang eingelegt ist.

Alternativ oder gleichzeitig kann das Starten beziehungsweise Stoppen des Motors auch durch Überdrücken des Schalthebels in der für den Rückwärtsgang R vorgesehenen Position des Schalthebels erfolgen.

Um die Sicherheit bei Start- und Stopp-Vorgängen zu gewährleisten, sollte insbesondere der Start des Motors mit der Betätigung anderer Einrichtungen, z. B. dem Betätigen des Bremspedals, gekoppelt werden. Zusätzlich kann der Start/Stopp des Motors durch Heben/Drücken des Hebels oder durch Betätigung eines zusätzlichen Schalters am Hebel gesichert sein.

Eine wirksame Sicherung stellt auch eine Zeitsteuereinrichtung dar, die als Zeitstufe ein versehentliches Betätigen des Schalt- beziehungsweise Wählhebels unterbindet. Erst wenn der Schalt- beziehungsweise Wählhebel eine bis zwei Sekunden betätigt wird, wird der Motor tatsächlich gestartet.

Grundsätzlich kann die Betätigung zum Starten oder Stoppen des Motors durch den Schalt- oder Wählhebel auch aus anderen als den oben aufgeführten Gängen erfolgen. Gegebenenfalls sind entsprechende Sicherungsmaßnahmen zu treffen. Außerdem können die Start- und Stopp-Positionen an unterschiedlichen Stellen liegen, wenn dies für die Handhabbarkeit des Fahrzeugs förderlich ist.

## Patentansprüche

1. Schaltvorrichtung zum Schalten einer elektronischen Komponente eines Kraftfahrzeugs mit
einem Getriebebetätigungselement, das für mehrere Getriebezustände in mehrere Stellungen versetzbar ist,
**dadurch gekennzeichnet, dass**
das Schalten der elektronischen Komponente durch ein Überdrücken einer Stellung des Getriebebetätigungselements, in der ein Gang eingelegt ist, durchführbar ist.

2. Schaltvorrichtung nach **Anspruch 1**, wobei der elektrische Schaltvorgang für eine Klemmensteuerung und/oder des Starten eines Motors dient.

3. Schaltvorrichtung nach **Anspruch 1 oder 2,** wobei zur Auslösung des elektrischen Schaltvorgangs das Betätigen des Getriebebetätigungselements und einer weiteren Einrichtung, insbesondere eines Bremspedals, erforderlich ist.

4. Schaltvorrichtung nach einem der **Ansprüche 1 bis 3**, wobei zur Auslösung des elektrischen Schaltvorgangs das Betätigen des Getriebebetätigungselementsin einer kombinierten Bewegung, insbesondere Schieben und Drücken oder Schieben und Heben, erforderlich ist.

5. Schaltvorrichtung nach einem der **Ansprüche 1 bis 4**, weiterhin umfassend eine Zeitsteuereinrichtung, die durch das Betätigen des Getriebebetätigungselements auslösbar ist, so dass der elektrische Schaltvorgang erfolgt, wenn das Getriebebetätigungselement eine vorgegebene Zeitdauer betätigt wird.

6. Schaltvorrichtung nach einem der **Ansprüche 1 bis 5**, wobei eine erste Bewegungsmöglichkeit des Getriebebetätigungselements für das Starten des Motors und eine zweite Bewegungsmöglichkeit für das Stoppen des Motors gegeben ist.

## Claims

1. Switching device for operating an electrical component of a vehicle with a gear operating element that can be shifted into several positions for several gearing states,
**characterized in that**
the operation of the electrical components can be carried out by pushing over a position of the gearing operating element into which a gear is inserted.

2. Switching device in accordance with claim 1, whereby the electrical actuation process serves to control the gripping and/or starting of a motor.

3. Switching device in accordance with claims 1 or 2, whereby control of the gear operating element and a further device, particularly a brake pedal is needed in order to release the electrical actuation process.

4. Switching device in accordance with one of claims 1 to 3, whereby control of the gear operating element in a combined movement, particularly pushing and pressing or pushing and lifting is necessary in order to release the electrical actuation process.

5. Switching device in accordance with one of claims 1 to 4, further comprising a time-control device that can be released by controlling the gear operating element, so that the electrical actuation process occurs if the gear operating system is actuated for a set period of time.

6. Switching device in accordance with one of claims 1 to 5, whereby there is a first possibility of movement of the gear operating element for starting the motor and a second possibility of movement for stopping the motor.

## Revendications

1. Dispositif de commutation pour commander, d'un composant électronique d'un véhicule automobile avec un élément de commande d'une boîte de vitesses, qui est déplaçable dans plusieurs positions pour plusieurs états de boîte de vitesses,
**caractérisé en ce que**
la commande des composants électroniques est réalisable via une surpression d'une position de l'élément de commande de la boîte de vitesses, dans laquelle une vitesse est mise.

2. Dispositif de commutation conformément à la **revendication 1**, dans lequel le processus de commande électrique sert pour une commande de bornes et / ou le démarrage du moteur.

3. Dispositif de commutation conformément à la **revendication 1 ou 2,** dans lequel l'actionnement de l'élément de commande de la boîte de vitesses et d'un autre dispositif, en particulier une pédale de frein, sont nécessaires pour le déclenchement du processus de commutation électrique.

4. Dispositif de commutation conformément à l'une des **revendications 1 à 3**, dans lequel l'actionnement de l'élément de commande de la boîte de vitesses dans un mouvement combiné, en particulier une poussée et une pression ou un décalage et un soulèvement sont nécessaires pour le déclenchement du processus de commutation électrique.

5. Dispositif de commutation conformément à l'une des **revendications 1 à 4**, comprenant en outre un dispositif de commande dans le temps, qui est déclenchable par l'actionnement de l'élément de commande de la boîte de vitesses, de sorte que le processus de commutation électrique s'ensuit lorsque l'élément de commande de la boîte de vitesses est actionné pendant une durée de temps prédéfinie.

6. Dispositif de commutation conformément à l'une des **revendications 1 à 5,** dans lequel une première possibilité de mouvement de l'élément de commande de la boîte de vitesses pour le démarrage du moteur et une seconde possibilité de mouvement pour l'arrêt du moteur sont données.
